# EUROPÄISCHE PATENTSCHRIFT

(11) **EP 1 773 632 B1**
(45) Veröffentlichungstag und Bekanntmachung des Hinweises auf die Patenterteilung: **23.07.2014**
(21) Anmeldenummer: 05771996.5
(22) Anmeldetag: 26.07.2005
(51) Int. Cl.: B60T 7/12, B60T 13/74

(54) **VERFAHREN ZUM BETRIEB EINER BREMSANLAGE FÜR KRAFTFAHRZEUGE**
METHOD FOR OPERATION OF A BRAKING SYSTEM FOR A MOTOR VEHICLE
PROCEDE POUR FAIRE FONCTIONNER UN SYSTEME DE FREINAGE POUR DES VEHICULES AUTOMOBILES

(30) Priorität: 02.08.2004 DE 102004037621; 10.02.2005 DE 102005006229; 04.07.2005 DE 102005031155
(43) Veröffentlichungstag der Anmeldung: 18.04.2007
(73) Patentinhaber: Continental Teves AG & Co. oHG, 60488 Frankfurt am Main (DE)
(72) Erfinder: KLUSEMANN, Rainer, 60529 Frankfurt am Main (DE); STASTNY, Karel, 65936 Frankfurt am Main (DE); HINN, Mirco, 60320 Frankfurt am Main (DE); KULBE, Ronald, 04827 Gerichshain (DE)
(86) Internationale Anmeldenummer: PCT/EP2005/053636
(87) Internationale Veröffentlichungsnummer: WO 2006/013174

(56) Entgegenhaltungen:
- WO-A-2004/106131
- DE-A1- 19 814 657
- DE-A1- 19 949 203

## Beschreibung

Die vorliegende Erfindung betrifft ein Verfahren zum Betrieb einer elektromechanisch betätigbaren Feststellbremse für Kraftfahrzeuge mit einem mit einem mechanischen Schaltgetriebe versehenen Antriebsmotor, die im wesentlichen aus einem Bedienelement, einer elektronischen Steuereinheit, der Raddrehzahlwerte von Raddrehzahlsensoren zugeführt werden, mindestens eine Einheit zur Erzeugung einer Zuspannkraft sowie mit durch die Einheit zuspannbaren Bremseinrichtungen an wenigstens einer Achse gebildet wird, wobei die elektronische Steuereinheit die Einheit nach einer Erkennung eines Anfahrvorganges des Kraftfahrzeugs im Sinne eines Lösevorganges der Feststellbremse ansteuert, und wobei vor der Durchführung des Lösevorganges der Feststellbremse die elektronische Steuereinheit die Einheit ansteuert, um die Zuspannkraft auf eine neigungsabhängige Haltekraft zu reduzieren.

Aus der DE 199 49 203 A1 ist ein derartiges Verfahren bekannt. Bei dem vorbekannten Verfahren wird die Feststellbremse bei erkannter Situation einer vorliegenden Anfahrt am Berg derart weit angezogen oder geschlossen, dass ein Zurückrollen des Fahrzeuges sicher verhindert wird. Ist das an der Kupplung eingestellte übertragene Drehmoment ausreichend groß, wird die Feststellbremse automatisiert geöffnet, sodass die Summe aus Vortriebskraft des Antriebsmotors und der Haltekraft der Feststellbremse entgegen der Hangabtriebskraft wirkt und dieser entspricht. Dadurch beginnt das Fahrzeug nicht in Richtung der Hangabtriebskraft an zu rollen. Zur Durchführung des Verfahrens sind eine Vielzahl von Sensoren notwendig, wie Gangerkennungssensor, Schaltabsichtssensor, Drehzahlsensor und Drosselklappensensor.

Das nachveröffentlichte Dokument WO 2004/106131 A1 beschreibt ein Verfahren zur Steuerung eines mit einer elektrischen Parkbremse ausgestatteten Bremssystems. Bei diesem Verfahren wird eine erste Zeitspanne vom Beginn des Einkuppelvorgangs bis zu einem Kupplungsansprechzeitpunkt, der dem sogenannten Kupplungsschleifpunkt entspricht, ermittelt. Anschließend wird der Lösezeitpunkt der elektrischen Parkbremse um eine zweite Zeitspanne vor dem Kupplungsansprechzeitpunkt gewählt. Dieses Verfahren stellt eine durchweg zeitabhängige Steuerung der Parkbremse dar und soll eine genauere Abstimmung der Deaktivierung der elektrischen Parkbremse auf den Einkuppelvorgang und damit auf den Anfahrvorgang des Fahrzeugs ermöglichen. Dabei wird allerdings nur unzureichend berücksichtigt, dass elektrische Parkbremsen typischerweise eine relativ lange Zeitspanne benötigen, um einen vollständigen Lösevorgang durchzuführen. Bei schnellen Anfahrvorgängen kann es daher vorkommen, dass der Kupplungsansprechzeitpunkt bereits erreicht ist und die elektrische Parkbremse noch nicht vollständig gelöst ist, was als weniger vorteilhaft anzusehen ist.

Es ist daher Aufgabe der vorliegenden Erfindung ein Verfahren zu entwickeln, welche die Zeitspanne zum Lösen der Feststellbremse verringert, um einen höheren Komfort bei gleichzeitig größtmöglicher Sicherheit zu erreichen.

Diese Aufgabe wird erfindungsgemäß durch ein Verfahren mit den Merkmalen des Anspruchs 1 gelöst. Dabei ist vorgesehen, dass bei Erkennung eines Anfahrvorganges und vor der Durchführung des Lösevorganges der Feststellbremse die elektronische Steuereinheit die Einheit ansteuert, um die Zuspannkraft auf eine neigungsabhängige Haltekraft zu reduzieren und dass ein Kupplungspedalwegsensor die Position eines Kupplungspedals des Kraftfahrzeugs ermittelt und die Ansteuerung für den Lösevorgang erfolgt, wenn das Kupplungspedal eine Position vor dem Kupplungsschleifpunkt erreicht hat.

Dabei ist vorgesehen, dass die neigungsabhängige Haltekraft mit Hilfe eines Sensors zur Neigungserkennung ermittelt wird.

Eine besonders vorteilhafte Weiterbildung sieht vor, dass die elektronische Steuereinheit die Einheit im Sinne einer Erhöhung der Zuspannkraft ansteuert, wenn die berechnete und eingestellte neigungsabhängige Haltekraft bzw. das sich ergebende Bremsmoment nicht ausreicht, um das Kraftfahrzeug zu halten. In diesem Fall ist vorgesehen, dass die Einheit derart angesteuert wird, dass die maximal mögliche Zuspannkraft erzeugt wird.

Außerdem ist vorgesehen, dass die Überprüfung, ob der Wert der neigungsabhängigen Haltekraft für das Halten des Kraftfahrzeugs ausreicht, mit Hilfe der Raddrehzahlsensoren erfolgt.

Es ist vorgesehen, dass die Position vor dem Kupplungsschleifpunkt zur Ansteuerung des Lösevorganges variabel ist und in Abhängigkeit der Hangneigung, der Betätigungsgeschwindigkeit des Kupplungspedals und der vom Fahrzeugführer gewünschten Fahrtrichtung des Kraftfahrzeugs bestimmt wird.

Die Hangneigung wird dabei von einem Sensor zur Neigungserkennung ermittelt. Die Betätigungsgeschwindigkeit des Kupplungspedals wird mit Hilfe des Kupplungspedalwegsensors ermittelt und die Fahrtrichtung des Kraftfahrzeugs mit einem Ganginformationssensor.

Die Erfindung wird nachfolgend anhand eines Ausführungsbeispiels im Zusammenhang mit der beiliegenden Zeichnung näher erläutert. In der Zeichnung zeigen:
- Fig. 1: ein schematisch dargestelltes Schaltbild eines hydraulischen Bremssystems, das eine elektromechanische Einheit zur Durchführung von Feststellbremsvorgängen aufweist und an der das erfindungsgemäße Verfahren durchführbar ist;
- Fig. 2: ein Flussdiagramm zur Erkennung eines Anfahrvorganges und anschließender Ansteuerung für einen Lösevorgang der Feststellbremse;
- Fig. 3: ein Diagramm, das den Weg eines Kupplungspedals schematisch darstellt und
- Fig. 4: ein Flussdiagramm zur Bestimmung einer Position vor dem Kupplungsschleifpunkt in Abhängigkeit der Hangneigung, der Betätigungsgeschwindigkeit des Kupplungspedals und der gewünschten Fahrtrichtung des Kraftfahrzeugs.

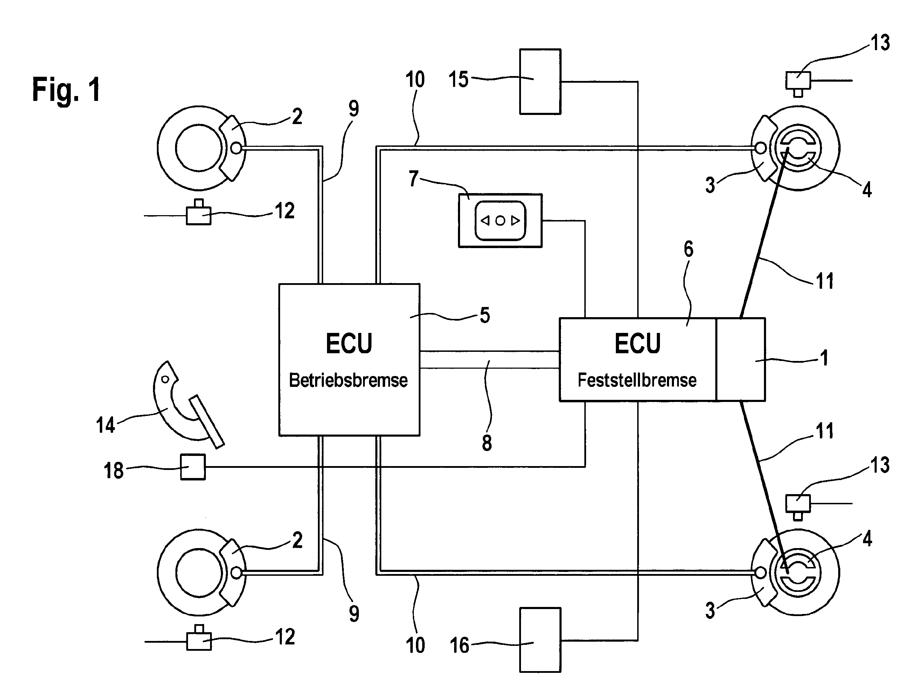

In Fig. 1 ist ein Schaltbild einer hydraulischen Bremsanlage schematisch dargestellt. Die hydraulische Bremsanlage weist an einer ersten Achse, der Vorderachse, Radbremsen 2 auf, die während Betriebsbremsungen über eine hydraulische Leitung 9 mit Druck beaufschlagbar sind. Zur Kontrolle der gewünschten Bremsverzögerung und zur Realisierung einer Blockierschutz-Regelung (ABS) sind den Rädern der Vorderachse Raddrehzahlsensoren 12 zugeordnet, deren Ausgangssignale einer elektronischen Steuer- und Regeleinheit (ECU) 5 zugeführt werden. Diese elektronische Steuer- und Regeleinheit 5 ist dem Betriebsbremssystem zugeordnet. An einer zweiten Achse, der Hinterachse, sind ebenfalls Radbremsen 3 vorgesehen, die während Betriebsbremsungen über eine zweite hydraulische Leitung 10 mit Druck beaufschlagbar sind. Die Raddrehzahlen der Räder der Hinterachse werden durch Raddrehzahlsensoren 13 ermittelt und der eben erwähnten elektronischen Steuer- und Regeleinheit 5 zugeführt. Außerdem weisen die Räder der Hinterachse neben den Radbremsen 3 für Betriebsbremsungen auch eine elektromechanisch betätigbare Feststellbremse auf. Die elektromechanisch betätigbare Feststellbremse umfasst zwei verriegelbare Bremseinrichtungen 4, die als Trommelbremsen 4 mit jeweils einem nicht näher dargestellten Spreizschloss ausgebildet sind. Das eben genannte Spreizschloss ist mittels eines Kabelzugs 11 von einer elektromechanischen Stelleinheit 1 betätigbar, wonach die Trommelbremsen 4 zugespannt werden. Ein Feststellbremsvorgang wird nach der Betätigung eines Bedienelementes 7 durch den Fahrzeugführer durchgeführt. Dabei werden die Ausgangssignale des Bedienelementes 7 einer der elektromechanischen Feststellbremse zugeordneten elektronischen Steuereinheit (ECU) 6 zugeführt, die die bereits erwähnte elektromechanische Stelleinheit 1 entsprechend ansteuert. Die eben genannte elektronische Steuereinheit 6 sowie die dem Betriebsbremssystem zugeordnete elektronische Steuer- und Regeleinheit 5 kommunizieren miteinander über eine Datenleitung 8, die als CAN-Verbindung ausgebildet ist.

In Fig. 1 ist zusätzlich schematisch ein Kupplungspedal 14 mit einem den Kupplungspedalweg ermittelnden Kupplungspedalwegsensor 18 dargestellt. Außerdem werden die Ausgangssignale eines Ganginformationssensors 15 und eines die Hangneigung bestimmenden Sensors zur Neigungserkennung 16 der der Feststellbremse zugeordneten Steuereinheit 6 zugeführt. Der Zweck der genannten Sensoren wird später näher erläutert.

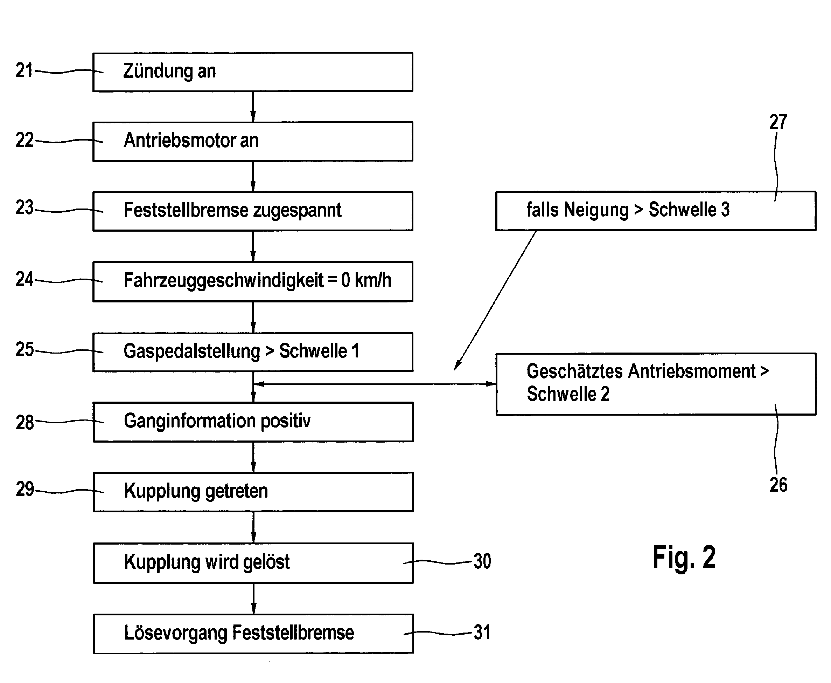

In Fig. 2 ist ein Flussdiagramm zur Erkennung eines Anfahrvorganges des Kraftfahrzeugs dargestellt, wobei die der Feststellbremse zugeordnete Steuereinheit 6 die Stelleinheit 1 nach Erkennung eines Anfahrvorgangs im Sinne eines Lösevorgangs der Feststellbremse ansteuert. Zur Erkennung eines Anfahrvorganges wird im Verfahrensschritt 21 zunächst über eine nicht dargestellte Signalleitung zum nicht dargestellten Zündschloss des Kraftfahrzeugs überprüft, ob die Zündung des Kraftfahrzeugs aktiviert ist. Falls die Zündung aktiviert ist, wird vorbehaltlich der nachfolgenden Verfahrensschritte angenommen, dass das Kraftfahrzeug in Bewegung gesetzt werden soll. Zu diesem Zweck wird zusätzlich im Verfahrensschritt 22 geprüft, ob sich der Antriebsmotor im Betriebsmodus befindet. Anschließend wird überprüft, ob die Feststellbremse zugespannt ist (Verfahrensschritt 23). Im nächsten Verfahrensschritt 24 zur Erkennung des Anfahrvorganges wird mit Hilfe der anhand von Fig. 1 erwähnten Raddrehzahlsensoren 12, 13 festgestellt, ob sich das Kraftfahrzeug im Stillstand befindet. Anschließend wird die Stellung des Gas- bzw. Fahrpedals ermittelt, das für die Erkennung des Anfahrvorganges vom Fahrzeugführer stärker betätigt werden muss als eine vorbestimmte, erste Schwelle (Verfahrensschritt 25). Im nachfolgenden Verfahrensschritt 28 wird mit Hilfe des bereits erwähnten Ganginformationssensors 15 geprüft, ob der Fahrzeugführer einen Gang eingelegt hat. Anschließend wird durch die Auswertung der Signale des Kupplungspedalwegsensors 18 ermittelt, ob der Fahrzeugführer das Kupplungspedal getreten hat (Verfahrensschritt 29). Sofern der Fahrzeugführer das Kupplungspedal 14 aus der eben erwähnten getretenen Position löst, ist in Verbindung mit den eben erwähnten Bedingungen ein Anfahrvorgang des Kraftfahrzeugs erkannt und die anhand von Fig. 1 erwähnte Steuereinheit 6 steuert die Stelleinheit 1 im Sinne eines Lösevorganges der Feststellbremse an (Verfahrensschritte 30, 31).

Falls das Kraftfahrzeug an einem Hang steht, der eine Steigung aufweist, die größer als eine vorbestimmte, dritte Schwelle ist, so wird zwischen den eben beschriebenen Verfahrensschritten 25 und 28 zusätzlich das Antriebsmoment des Antriebsmotors des Kraftfahrzeugs geschätzt. Dieses geschätzte Antriebsmoment muss größer sein, als eine vorbestimmte, zweite Schwelle (Verfahrensschritte 26, 27). Die Steigung des Hanges wird dabei mit dem anhand von Fig. 1 erwähnten Sensor zur Neigungserkennung 16, der die Neigung des Kraftfahrzeugs bestimmt, ermittelt.

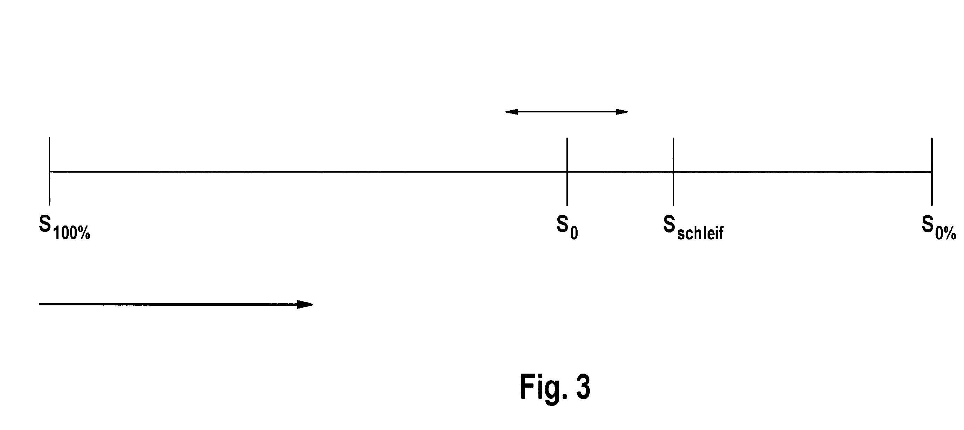

Zur Verdeutlichung des erfindungsgemäßen Verfahrens ist in Fig. 3 ein Diagramm, das den Weg des Kupplungspedals 14 schematisch darstellt, gezeigt. Die mit S_{100%} bezeichnet Position auf der linken Seite in Fig. 3 stellt dabei die Kupplungspedalposition dar, bei der der Fahrzeugführer das Kupplungspedal 14 vollständig getreten hat. Wenn der Fahrzeugführer das Kupplungspedal 14 aus der vollständig getretenen Position S_{100%} herausführt, passiert das Kupplungspedal 14 den Kupplungsschleifpunkt S_{schleif}, bei dem das Motormoment des Antriebsmotors auf die Antriebsachse übertragen wird, und wird schließlich in die Ruhe-Position S_{0%} geführt, bei der der Fahrzeugführer seinen Fuß vom Kupplungspedal 14 genommen hat. Das erfindungsgemäße Verfahren sieht vor, dass die Ansteuerung für den Lösevorgang der Feststellbremse erfolgt, wenn das Kupplungspedal 14 eine Position S₀ vor dem Kupplungsschleifpunkt S_{schleif} erreicht hat. Die Position S₀ liegt dabei im Bereich zwischen einem zu 80% getretenen Kupplungspedal 14 und dem Kupplungsschleifpunkt S_{schleif}.

Zur Bestimmung des Kupplungsschleifpunkts S_{schleif} sind verschiedene Verfahren bekannt. Beispielsweise kann einerseits die für diese Position des Kupplungspedals 14 charakteristische Änderung der Beschleunigung des Kraftfahrzeugs mittels eines geeigneten Sensors ermittelt werden. Alternativ kann der Kupplungsschleifpunkt S_{schleif} auch indirekt ermittelt werden, indem das Verhältnis zwischen Drehzahl des Antriebsmotors und dessen Drehmoment bestimmt wird, das ebenfalls eine signifikante Änderung aufweist, wenn das Kupplungspedal 14 den Kupplungsschleifpunkt S_{schleif} passiert. Da der Kupplungsschleifpunkt S_{schleif} von der Temperatur und vom Verschleiß der Kupplung abhängt, ist es zweckmäßig eine regelmäßige Erfassung des Kupplungsschleifpunkts S_{schleif} durchzuführen. Insbesondere kann die Erfassung bei jedem Anfahrvorgang erfolgen.

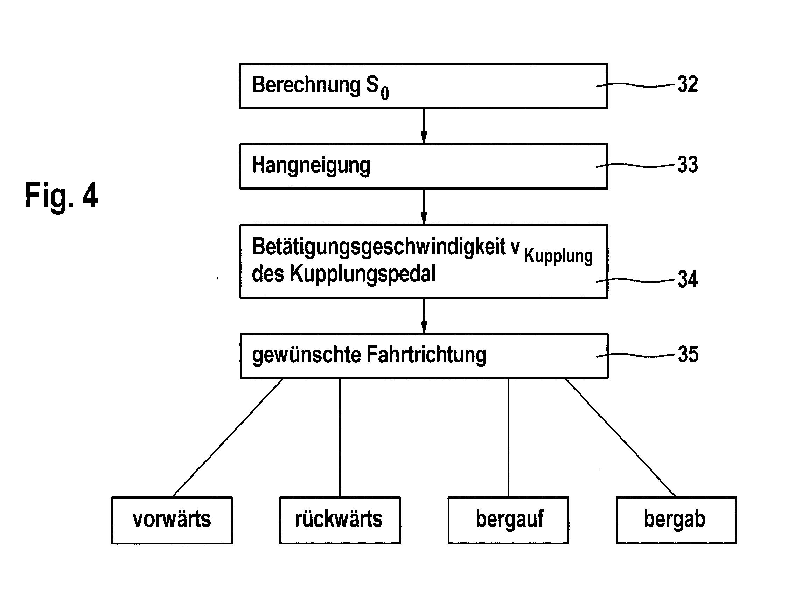

Die eben erwähnte Position S₀ vor dem Kupplungsschleifpunkt S_{schleif}, die für den Lösevorgang der Feststellbremse maßgeblich ist, ist variabel und wird in Abhängigkeit der Anfahrsituation bestimmt. Die Bestimmung der Position S₀ wird anhand von Fig. 4 näher erläutert. Zunächst wird die Neigung des Kraftfahrzeugs im Verfahrensschritt 33 mit dem bereits erwähnten Sensor zur Neigungserkennung 16 ermittelt. Außerdem wird die Betätigungsgeschwindigkeit V_{Kupplung} des Kupplungspedals 14 mit Hilfe des Kupplungspedalwegsensors 18 sowie die Fahrtrichtung des Kraftfahrzeugs mit dem vorhin erwähnten Ganginformationssensor 15 bestimmt (Verfahrensschritte 34, 34). Zur Bestimmung der Fahrtrichtung wird mit dem Ganginformationssensor 15 vorzugsweise ermittelt, ob der Fahrzeugführer den Vorwärts- oder den Rückwärtsgang eingelegt hat.

Bei Vorwärtsfahrt kann die Position S₀ in Relation zum Kupplungsschleifpunkts S_{schleif} weiter entfernt gewählt werden als bei Rückwärtsfahrt, da dieses die normale und gewohnte Fahrtrichtung ist.

In Abhängigkeit der Hangneigung und der Fahrtrichtung des Kraftfahrzeugs ist bei beispielsweise "Bergab" und "vorwärts" immer ein möglichst frühes Lösen der Feststellbremse wünschenswert, um dem Gefühl des Fahrzeugführers, festgehalten zu werden, entgegen zu wirken. Das bedeutet, die Position S₀ wird in Relation zum Kupplungsschleifpunkts S_{schleif} weit entfernt gewählt. Soll jedoch bergauf gefahren werden, so muss verhindert werden, dass das Kraftfahrzeug ungewollt entgegen der gewünschten Fahrtrichtung zurück rollt. Dies bedeutet, dass in dieser Situation erst bei Erreichen des Kupplungsschleifpunkts S_{schleif} die Feststellbremse gelöst werden darf. Die Position S₀ ist dann in etwa deckungsgleich mit der Position des Kupplungsschleifpunkts S_{schleif}.

Löst der Fahrer das Kupplungspedal 14 sehr langsam aus der voll getretenen Position S_{100%}, so wird die Position S₀ ebenfalls in etwa deckungsgleich mit der Position des Kupplungsschleifpunkts S_{schleif} sein. Löst der Fahrer jedoch das Kupplungspedal 14 sehr schnell so weiß man, dass der Kupplungsschleifpunkt S_{schleif} innerhalb sehr kurzer Zeit erreicht sein wird. Aufgrund dieser Erkenntnis und damit der Anfahrvorgang möglichst komfortabel gestaltet werden kann, erfolgt auch zu diesem Parameter eine Anpassung der Position S₀.

Da die Stelleinheit 1 stets die maximal mögliche Zuspannkraft einstellt, sieht das vorliegende Verfahren außerdem vor, dass bei Erkennung eines Anfahrvorganges bereits vor der Durchführung des Lösevorganges der Feststellbremse die Zuspannkraft auf eine neigungsabhängige Haltekraft reduziert wird, um einen Lösevorgang der Feststellbremse nach Erkennung eines Anfahrvorganges des Kraftfahrzeugs zu beschleunigen und so komfortabel wie möglich zu gestalten. Die Feststellbremse wird also "vorgelöst". Zu diesem Zweck steuert die anhand von Fig. 1 beschriebene elektronische Steuereinheit 6 die Stelleinheit 1 derart an, sodass eine neigungsabhängige Haltekraft eingestellt wird. Diese Haltekraft wird mit Hilfe des Sensors zur Neigungserkennung 16 ermittelt. Die Einstellung dieser neigungsabhängigen Haltekraft erfolgt, nachdem der Fahrzeugführer das Kupplungspedal 14 vollständig getreten hat und einen Gang eingelegt hat. Dies wird wiederum mit Hilfe des Kupplungspedalwegsensors 18 und des Ganginformationssensors 15 ermittelt. Nachdem die neigungsabhängige Haltekraft eingestellt wurde, wird gemäß dem bereits beschriebenen Verfahren die Feststellbremse gelöst, sofern der Fahrzeugführer den Anfahrvorgang fortsetzt und das Kupplungspedal 14 in die bereits beschriebene Position S_{0%} führt.

Sollte die eben erwähnte neigungsabhängige Haltekraft fehlerhaft eingestellt worden sein oder wegen anderer Randbedingungen zum Halten des Kraftfahrzeuges nicht ausreichend sein und das Kraftfahrzeug sich ungewollt entgegengesetzt der gewünschten Fahrtrichtung in Bewegung setzen, so wird die Stelleinheit 1 im Sinne einer Erhöhung der Zuspannkraft angesteuert. Vorzugsweise wird dabei wieder die maximal mögliche Zuspannkraft eingestellt. Das Zurückrollen entgegen der gewünschten Fahrtrichtung wird dabei mit Hilfe der Signale des Ganginformationssensors 15, der Informationen über die gewünschte Fahrtrichtung zur Verfügung stellt, sowie mit Hilfe der Raddrehzahlsensoren 12, 13 erfasst. Allerdings ist die Erfassung, ob das Kraftfahrzeug entgegen der vom Fahrzeugführer gewünschten Fahrtrichtung zurückrollt, nur dann ermittelbar, wenn die Raddrehzahlsensoren 12, 13 zusätzlich zur Ermittlung der Raddrehzahl auch die Drehrichtung der Räder des Kraftfahrzeugs ermitteln. Ist dies nicht der Fall, so wird die Stelleinheit 1 bei einer durch die Raddrehzahlsensoren 12, 13 ermittelten Drehbewegung der Räder des Kraftfahrzeugs, das heißt also bei einem Rollen des Kraftfahrzeugs, im Sinne einer Erhöhung der Zuspannkraft angesteuert, wenn zuvor kein vollständiger Lösebefehl der Feststellbremse ausgegeben wurde.

## Patentansprüche

1. Verfahren zum Betrieb einer elektromechanisch betätigbaren Feststellbremse für Kraftfahrzeuge mit einem mit einem mechanischen Schaltgetriebe versehenen Antriebsmotor, die im wesentlichen aus einem Bedienelement (7), einer elektronischen Steuereinheit (6), der Raddrehzahlwerte von Raddrehzahlsensoren (12, 13) zugeführt werden, mindestens eine Einheit (1) zur Erzeugung einer Zuspannkraft sowie mit durch die Einheit (1) zuspannbaren Bremseinrichtungen (4) an wenigstens einer Achse gebildet wird, wobei die elektronische Steuereinheit (6) die Einheit (1) nach einer Erkennung eines Anfahrvorganges des Kraftfahrzeugs im Sinne eines Lösevorganges der Feststellbremse ansteuert, und wobei vor der Durchführung des Lösevorganges der Feststellbremse die elektronische Steuereinheit (6) die Einheit (1) ansteuert, um die Zuspannkraft auf eine neigungsabhängige Haltekraft zu reduzieren, **dadurch gekennzeichnet, dass** ein Kupplungspedalwegsensor (18) die Position eines Kupplungspedals (14) des Kraftfahrzeugs ermittelt und die Ansteuerung für den Lösevorgang erfolgt, wenn das Kupplungspedal (14) eine Position (S₀) vor dem Kupplungsschleifpunkt (S_{schleif}) erreicht hat.

2. Verfahren nach Anspruch 1, **dadurch gekennzeichnet, dass** die neigungsabhängige Haltekraft mit Hilfe eines Sensors zur Neigungserkennung (16) ermittelt wird.

3. Verfahren nach Anspruch 1 oder 2, **dadurch gekennzeichnet, dass** die elektronische Steuereinheit (6) die Einheit (1) im Sinne einer Erhöhung der Zuspannkraft ansteuert, wenn die neigungsabhängige Haltekraft nicht ausreicht, um das Kraftfahrzeug zu halten.

4. Verfahren nach Anspruch 3, **dadurch gekennzeichnet, dass** die Einheit (1) derart angesteuert wird, dass die maximal mögliche Zuspannkraft erzeugt wird.

5. Verfahren nach einem der Anspruch 3 oder 4, **dadurch gekennzeichnet, dass** die Überprüfung, ob der Wert der neigungsabhängigen Haltekraft für das Halten des Kraftfahrzeugs ausreicht, mit Hilfe der Raddrehzahlsensoren (12, 13) erfolgt.

6. Verfahren nach Anspruch 1, **dadurch gekennzeichnet, dass** die Position (S₀) variabel ist und in Abhängigkeit der Hangneigung (α), der Betätigungsgeschwindigkeit (v_{Kupplung}) des Kupplungspedals (14) und der vom Fahrzeugführer gewünschten Fahrtrichtung des Kraftfahrzeugs bestimmt wird.

7. Verfahren nach Anspruch 6, **dadurch gekennzeichnet, dass** die Hangneigung (α) von dem Sensor zur Neigungserkennung (16) ermittelt wird.

8. Verfahren nach einem der Ansprüche 6 oder 7, **dadurch gekennzeichnet, dass** die Betätigungsgeschwindigkeit (v_{Kupplung}) des Kupplungspedals (14) mit Hilfe des Kupplungspedalwegsensors (18) ermittelt wird.

9. Verfahren nach einem der Ansprüche 6 bis 8, **dadurch gekennzeichnet, dass** die vom Fahrzeugführer gewünschte Fahrtrichtung des Kraftfahrzeugs mit einem Ganginformationssensor (15) ermittelt wird.

## Claims

1. Method for operating an electromechanically actuable parking brake for motor vehicles having a drive engine which is provided with a mechanical transmission, said parking brake being formed essentially from an operator control (7), an electronic control unit (6), to which wheel speed values of wheel rotational speed sensors (12, 13) are fed, at least one unit (1) for generating a brake application force and having brake devices (4) which can be applied by the unit (1), on at least one axis, wherein the electronic control unit (6) activates the unit (1) after detection of a starting process of the motor vehicle in the sense of a release process of the parking brake, and wherein before the release process of the parking brake is performed the electronic control unit (6) activates the unit (1) in order to reduce the brake application force to an inclination-dependent holding force **characterized in that** a clutch pedal travel sensor (18) determines the position of a clutch pedal (14) of the motor vehicle, and the activation for the release process takes place when the clutch pedal (14) has reached a position (S₀) before the clutch slip effect (Sₛₗᵢₚ).

2. Method according to Claim 1, **characterized in that** the inclination-dependent holding force is acquired using an inclination detection sensor (16).

3. Method according to Claim 1 or 2, **characterized in that** the electronic control unit (6) activates the unit (1) in the sense of an increase in the brake application force when the inclination-dependent holding force is not sufficient to hold the motor vehicle.

4. Method according to Claim 3, **characterized in that** the unit (1) is activated in such a way that the maximum possible brake application force is generated.

5. Method according to one of Claims 3 and 4, **characterized in that** the checking as to whether the value of the inclination-dependent holding force is sufficient to hold the motor vehicle is carried out using wheel rotational speed sensors (12, 13).

6. Method according to Claim 1, **characterized in that** the position (S₀) is variable and is determined as a function of the inclination (α) of the slope, the activation speed (V_{Clutch}) of the clutch pedal (14) and the direction of travel of the motor vehicle which is desired by the vehicle driver.

7. Method according to Claim 6, **characterized in that** the inclination (α) of the slope is acquired by the inclination detection sensor (16).

8. Method according to one of Claims 6 and 7, **characterized in that** the activation speed (V_{Clutch}) of the clutch pedal (14) is acquired using the clutch pedal travel sensor (18).

9. Method according to one of Claims 6 to 8, **characterized in that** the direction of travel of the motor vehicle which is desired by the vehicle driver is acquired with a gear speed information sensor (15).

## Revendications

1. Procédé d'utilisation d'un frein de stationnement à actionnement électromécanique pour véhicules automobiles qui présentent un moteur d'entraînement doté d'une boîte de transmission mécanique,
le frein étant formé essentiellement d'un élément d'actionnement (7), d'une unité électronique de commande (6) à laquelle les valeurs de vitesse de rotation des roues sont apportées par des capteurs (12, 13) de vitesse de rotation des roues, d'au moins une unité (1) qui applique une force de serrage ainsi que de dispositifs de freins (4) aptes à être serrés par l'unité (1) et prévus sur au moins un essieu,
l'unité électronique de commande (6) commandant l'unité (1) après avoir détecté une opération de démarrage du véhicule automobile, pour qu'elle introduise une opération de libération du frein de stationnement et l'unité électronique de commande (6) commandant l'unité (1) de manière à réduire la force de serrage à une force de retenue qui dépend de la pente avant l'exécution de l'opération de libération du frein de stationnement,
**caractérisé en ce que**
un capteur (18) de pédale d'embrayage détermine la position de la pédale d'embrayage (14) du véhicule automobile et
**en ce que** la commande de l'opération de libération a lieu lorsque la pédale d'embrayage (14) a atteint une position (S₀) située en avant du point de patinage (S_{schleif}) de l'embrayage.

2. Procédé selon la revendication 1, **caractérisé en ce que** la force de retenue dépendant de la pente est déterminée à l'aide d'un capteur de détection (16) de la pente.

3. Procédé selon les revendications 1 ou 2, **caractérisé en ce que** l'unité électronique de commande (6) commande l'unité (1) dans le sens d'une augmentation de la force de serrage lorsque la force de maintien dépendant de la pente ne suffit pas pour retenir le véhicule automobile.

4. Procédé selon la revendication 3, **caractérisé en ce que** l'unité (1) est commandée de manière à appliquer la force de serrage maximale possible.

5. Procédé selon l'une des revendications 3 ou 4, **caractérisé en ce que** la vérification que la valeur de la force de maintien dépendant de la pente suffit pour retenir le véhicule automobile s'effectue à l'aide des capteurs (12, 13) de vitesse de rotation des roues.

6. Procédé selon la revendication 1, **caractérisé en ce que** la position (S₀) est variable et est déterminée en fonction de l'inclinaison (α) de la suspension, de la vitesse d'actionnement (V_{Kupplung}) de la pédale d'embrayage (14) et de la direction de roulage du véhicule automobile souhaitée par le conducteur du véhicule.

7. Procédé selon la revendication 6, **caractérisé en ce que** la pente de suspension (α) est déterminée par le capteur de détection (16) de la pente.

8. Procédé selon l'une des revendications 6 ou 7, **caractérisé en ce que** la vitesse d'actionnement (V_{Kupplung}) de la pédale d'embrayage (14) est déterminée à l'aide du capteur (18) de course de pédale d'embrayage.

9. Procédé selon l'une des revendications 6 à 8, **caractérisé en ce que** la direction de roulage du véhicule automobile souhaitée par le conducteur du véhicule est déterminée à l'aide d'un capteur (15) d'information sur les rapports de transmission.
